# EUROPEAN PATENT APPLICATION

(11) **EP 2 015 277 A2**
(43) Date of publication of application: **14.01.2009**
(21) Application number: 08159967.2
(22) Date of filing: 08.07.2008
(51) Int. Cl.: G09B 9/40, G09B 9/54

(54) **Systems and methods for side angle radar training and simulation**

(30) Priority: 13.07.2007 US 777869
(71) Applicant: Honeywell International Inc., Morristown NJ 07960 (US)
(72) Inventor: Ronish, Edward W., Laurel, MD 20723 (US); Bixby, Greg J., Placitas, NM 87043 (US)
(74) Representative: Buckley, Guy Julian

(57) **Abstract**

A system and method for simulating side angle radar in an aircraft. The system includes a display, an input device for receiving user input and generating an input signal, an aerial photograph database, a terrain elevation database, and a processing device in signal communication with the display and the input device, the processing device configured to receive the input signal from the input device and produce an image on the display based on the input signal and information contained in the aerial photograph and terrain elevation databases. The method includes receiving input from a user, accessing aerial photograph and digital terrain elevation data based on the received input, and displaying an image that simulates side angle radar (SAR) imagery based on the accessed aerial photograph and terrain elevation data.

## Description

### BACKGROUND OF THE INVENTION

Synthetic Aperture Radar (SAR), also referred to as side angle radar, is used in some applications to provide operators in an aircraft with a view of the ground through clouds and smoke. The operator may use the SAR to view buildings, vehicles, or people for purposes of intelligence gathering, or to view terrain in an area of interest. SAR data is typically collected off of the axis of the aircraft heading, generally from approximately 45 degrees to 135 degrees. Most military SARs have imaging modes, such as strip and spot modes. SAR is not typically available on all aircraft due to its relatively high cost. This is disadvantageous for training new SAR operators.

### SUMMARY OF THE INVENTION

The present invention includes systems and methods for simulating side angle radar in an aircraft. An example system includes a display, an input device for receiving user input and generating an input signal, an aerial photograph database, a terrain elevation database, and a processing device in signal communication with the display, the input device, and the databases, the processing device configured to receive the input signal from the input device and produce an image on the display based on the input signal and information contained in the aerial photograph and terrain elevation databases.

In accordance with further aspects of the invention, the aircraft includes a digital map system that generates and displays a digital map of an area near the aircraft, the terrain elevation database and the aerial photograph database are compatible with the digital map system, and the processing device is configured to overlay images on the digital map by displaying aerial photograph data from the aerial photograph database on top of terrain elevation data from the terrain elevation database based on information received from the input device.

In accordance with other aspects of the invention, the aerial photograph database is stored at multiple pixel resolutions.

In accordance with still further aspects of the invention, a method includes receiving input from a user, accessing aerial photograph and digital terrain elevation data based on the received input, and displaying an image that simulates side angle radar (SAR) imagery based on the accessed aerial photograph and terrain elevation data.

In accordance with yet other aspects of the invention, receiving input includes receiving a zoom level and accessing aerial photograph and terrain elevation data includes accessing data having a pixel resolution corresponding to the received zoom level.

In accordance with still another aspect of the invention, the accessed aerial photograph and digital terrain data have not been previously combined, and the method further includes processing the accessed aerial photograph and digital terrain data by overlaying the accessed aerial photograph data on the accessed digital terrain data.

In accordance with still other aspects of the invention, receiving input includes receiving input from an input device that is structured in similar fashion to an input device used for an actual airborne SAR.

### BRIEF DESCRIPTION OF THE DRAWINGS

Preferred and alternative embodiments of the present invention are described in detail below with reference to the following drawings:

FIGURE 1 is a block diagram of a system for simulating side angle radar in an aircraft formed in accordance with an embodiment of the invention;

FIGURE 2 is a diagram showing a representation of an aircraft in which the system of FIGURE 1 is located;

FIGURE 3 is a flowchart of a method in accordance with an example of the invention;

FIGURES 4-6 are examples of images before and after overlaying aerial photograph imagery on digital terrain elevation data.

### DETAILED DESCRIPTION OF THE PREFERRED EMBODIMENT

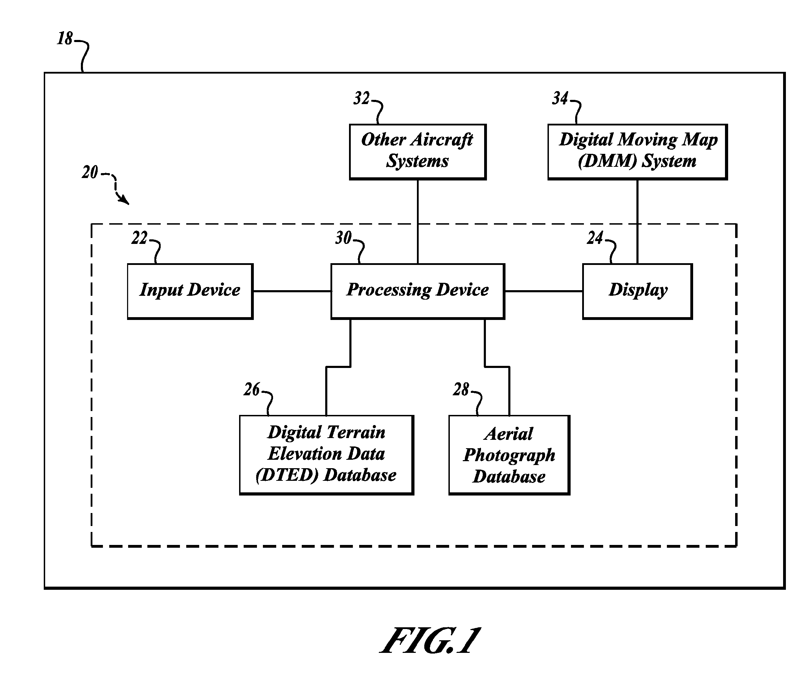

FIGURE 1 is a block diagram of an example system 20 for simulating side angle radar in an aircraft 18, formed in accordance with an embodiment of the invention. The system 20 includes an input device 22 for receiving input from a user and generating an input signal, a display 24, a terrain elevation database 26 configured to store terrain elevation data, and an aerial photograph database 28 configured to store a plurality of aerial photographs. In an example, the terrain elevation database 26 and the aerial photograph database 28 are separate databases, but they also may be stored in a single database or in other forms of storage. The system 20 also includes a processing device 30 in signal communication with the input device 22, the display 24, the terrain elevation database 26, and the aerial photograph database 28. The processing device 30 is configured to receive the input signal form the input device 22 and produce an image on the display 24 based on the input signal and information contained in the aerial photograph database 28 and the terrain elevation database 26.

In an example, the input device 22 is structured in similar fashion to an input device used for an actual airborne SAR and may include a zoom level selector, a mode selector (strip, spot), and any other inputs such as are typically found on a bezel of an actual airborne SAR. The input device 22 may include a pilot/vehicle interface for example. The processing device 30 is also configured to receive information from other aircraft systems 32 in some embodiments. The processing device 30 may receive information from the other aircraft systems 32 relating to the aircraft 18 geolocation, altitude, heading, and ground speed, for example.

In an example, the aerial photograph database 28 is stored in a compressed format at multiple pixel resolutions that represent actual resolutions of approximately 10, 7.5, 5, 3.75, and 1 meter spacings to simulate various scale settings available to a user of an actual airborne SAR. These spacings are the distance represented by the width of one pixel on the display 24. Other pixel resolutions may be used. Additionally, in an example, scaling factors may be applied by the processing device 30 to obtain pixel spacings between the fixed spacings such that a user may view images on the display 24 at zoom levels other than the fixed spacings. The compressed format may be a Controlled Image Base (CIB) format, or a Compressed ARC Digitized Raster Graphics (CADRG) format, for example. In an example, the terrain elevation database 26 is resampled into Regridded Digital Terrain Elevation Data (RDTED) format with multiple pixel resolutions that are approximately the same as the aerial photograph database 28 pixel resolutions.

The terrain elevation database 26 and/or the aerial photograph database 28 may be stored on a removable cartridge (not shown) that is in signal communication with the processing device 30 when the cartridge is installed on the aircraft 18. However, in other examples, the databases 26, 28 are stored in a memory or secondary storage device associated with the processing device 30.

In one example, shadow effects present in aerial photograph images stored in the aerial photograph database 28 are not altered by the processing device 30 and shadow effects are generated in digital terrain elevation data by the processing device 30 from a perspective of illumination by a simulated SAR in the aircraft 18 before the digital terrain elevation data is combined with the aerial photograph data to form an image including original and generated shadows that is displayed on the display 24. In an example, the processing device 30 applies shading effects to underlying data from the terrain elevation database 26 to enhance the appearance of images on the display 24.

In one example, the aircraft 18 also includes a digital moving map system (DMM) 34 that generates and displays a digital map of an area near the aircraft 18. The system 20 is compatible with the DMM 34, and the processing device 30 is configured to overlay images on the digital map to form a combined image by displaying aerial photograph data from the aerial photograph database 28 on top of terrain elevation data from the terrain elevation database 26 based on the input signal generated by the input device 22. The DMM 34 is a three-dimensional map in an example. However, the DMM 34 may be a two-dimensional map in other examples. The system 20 may also overlay symbols or icons on the combined image.

It should be appreciated that the functions necessary to implement the various elements of the system 20 may be embodied in whole or in part using hardware or software or some combination thereof using microprocessors, microcontrollers, digital signal processors, programmable logic arrays, data storage devices, embedded memory, ROM, RAM, FLASH memory, or any other suitable types of hardware and/or software.

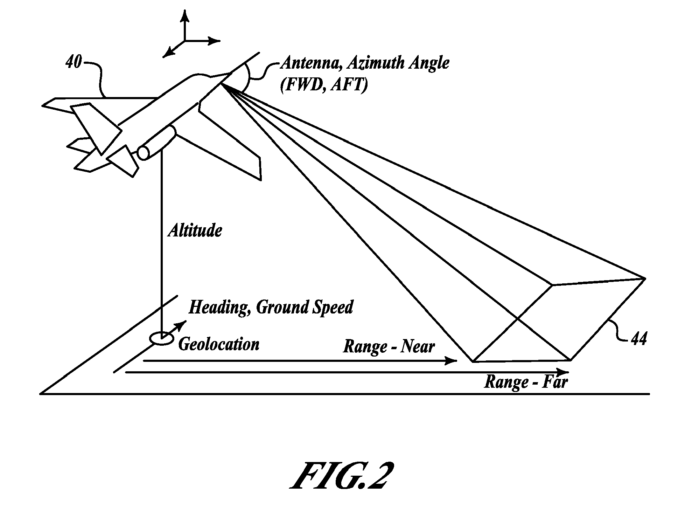

FIGURE 2 is a diagram showing a representation of an aircraft 40, in which the system 20 described with respect to FIGURE 1 is located in an example. In other examples, the aircraft 40 may be a manned or an unmanned remotely controlled aircraft, with portions of the system 20 remotely located from the aircraft 40. At any particular time, the aircraft 40 may be described as being at a particular geolocation, such as by using latitude and longitude coordinates, at a particular altitude, and proceeding with a particular heading and ground speed. In aircraft with actual SAR devices, an antenna associated with the SAR is used by the SAR to scan an antenna scan area 44. The antenna scan area 44 is based on a near range and a far range that extend to the side of the aircraft 40 as well as a forward (FWD) and an aft (AFT) antenna azimuth angle that are described with respect to a longitudinal axis of the aircraft 40. In an example, the system 20 described with respect to FIGURE 1, generates a display that corresponds to the antenna scan area 44 by using the aircraft 40 geolocation, altitude, heading, ground speed, near and far ranges, and FWD and AFT azimuth angles. The near and far ranges as well as the FWD and AFT azimuth angles may be simulated values that are responsive to inputs received at the input device 22, for example.

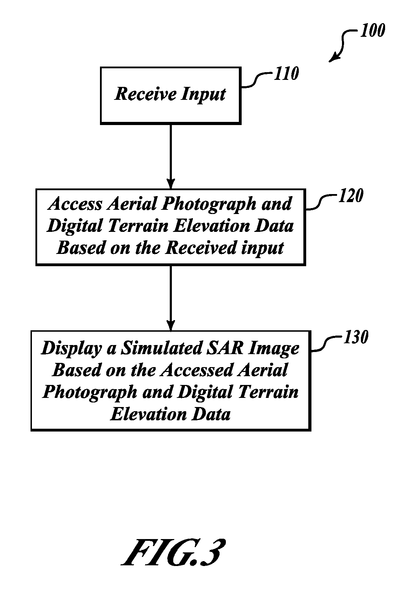

FIGURE 3 is a flowchart of a method 100 in accordance with an example of the invention. First, at a block 110, input is received at the input device 22 from a user. Then, at a block 120, aerial photograph data and digital terrain elevation data, such as might be located in the digital terrain elevation database 26 and the aerial photograph database 28, are accessed by the processing device 30 based on the received input. Then, at a block 130, an image that simulates side angle radar (SAR) imagery is displayed on the display 24 based on the accessed aerial photograph and terrain elevation data.

In an example, receiving input at the block 110 includes receiving a zoom level and accessing aerial photograph and terrain elevation data at the block 120 includes accessing aerial photograph and terrain elevation data based on the received zoom level. In an additional example, receiving input includes receiving a desired radar mode at a pilot/vehicle interface selected from at least a spot mode and a strip mode, and accessing aerial photograph and terrain elevation data is based on the received desired mode. In an example, a default setting of strip mode is used by the processing device 30 in generating an image displayed on the display 24. If spot mode is selected by a user at the input device 22, the image displayed on the display 24 may be masked to simulate a "spot" or "spot light" mode of an actual SAR image if the spot size is smaller than a viewport of the display 24. In another embodiment, user input may be received at and/or detected by one or more of the other aircraft systems 32. In one example, the accessed aerial photograph and digital terrain data has been previously combined into a database that includes aerial photograph data overlaid onto digital terrain data. However, in another example, the accessed aerial photograph and digital terrain data have not been previously combined and the method 100 includes processing the accessed aerial photograph and digital terrain data by overlaying the accessed aerial photograph data on the accessed digital terrain data.

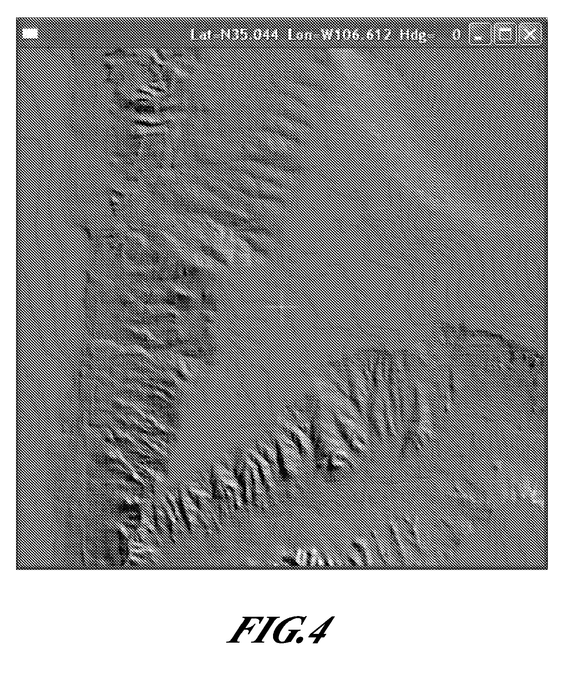

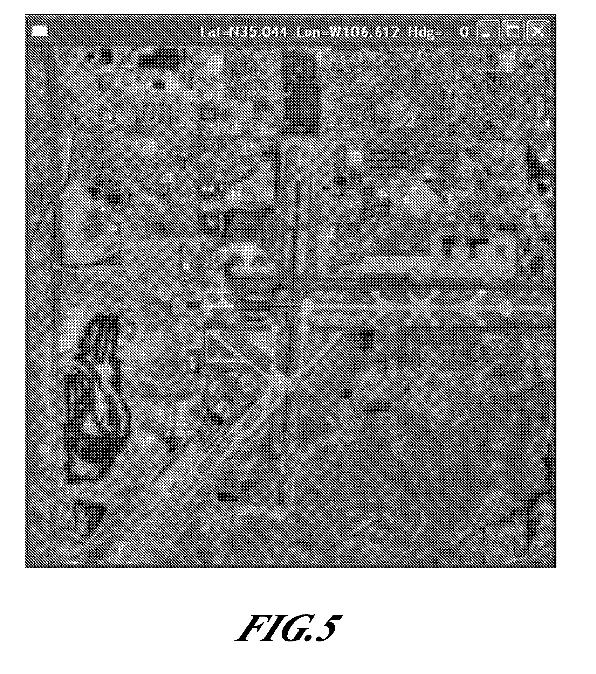

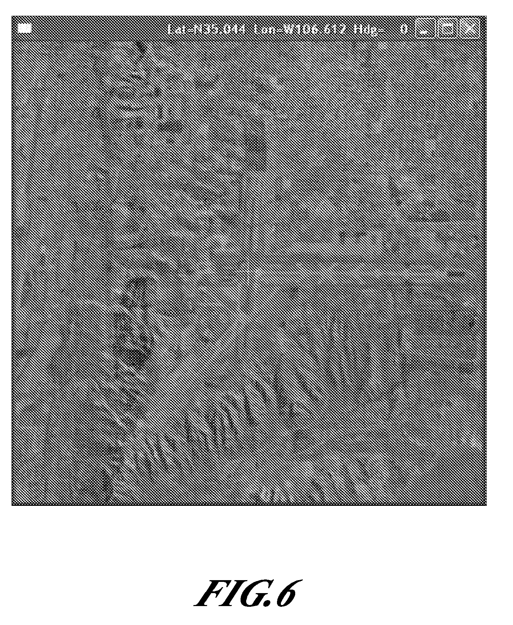

FIGURES 4-6 are examples of images before and after combining aerial photograph imagery with digital terrain elevation data. FIGURE 4 illustrates an image formed from digital terrain elevation data, such as might be stored in the DTED database 26, for a particular geolocation using a resolution of approximately 10 meters. FIGURE 5 illustrates an aerial photography image, such as might be stored in the aerial photograph database 28, for the same geolocation and approximately the same resolution. FIGURE 6 shows an example image, such as would be formed by the processing device 30 and displayed on the display 24 based on input received at the input device 22, by combining the aerial photography image in FIGURE 5 with the digital terrain elevation data image from FIGURE 4.

In an example, the image displayed on the display 24 is generated as a three dimensional digital map by the processing device 30. The three dimensional map is generated using terrain elevation data from the DTED database 26 in the form of an elevation grid in RDTED format that may be described as having elevation posts at each point of the elevation grid. The processing device 30 applies a texture that includes each pixel of an aerial photograph from the aerial photograph database 28 by stretching the aerial photograph over the elevation posts of the elevation grid. The processing device 30 then smoothes the combined image, such as by using Gouraud shading, for example to form an image that is displayed on the display 24. The images shown in FIGURES 4-6 also have the same rotational orientation that corresponds to a heading of the aircraft 18 in which the system 20 is located when the images are generated.

While the preferred embodiment of the invention has been illustrated and described, as noted above, many changes can be made without departing from the spirit and scope of the invention. For example, satellite image data rather than aerial photography data could be used in the aerial photography database. Accordingly, the scope of the invention is not limited by the disclosure of the preferred embodiment. Instead, the invention should be determined entirely by reference to the claims that follow.
The embodiments of the invention in which an exclusive property or privilege is claimed are defined as follows:

## Claims

1. A system (20) for simulating side angle radar in an aircraft, the system (20) comprising:
a display (24);
an input device (22) for receiving user input and generating an input signal;
an aerial photograph database (28) configured to store a plurality of aerial photographs;
a terrain elevation database (26) configured to store terrain elevation data;
a processing device (30) in signal communication with the display (24), the input device (22), and the databases (26, 28), the processing device (30) configured to receive the input signal from the input device (22) and produce an image on the display (24) based on the input signal and information contained in the aerial photograph (28) and terrain elevation databases (26).

2. The system of Claim 1, wherein the aerial photographs in the aerial photograph database (28) are stored in a compressed format.

3. The system of Claim 1, wherein the aerial photograph database (28) is stored at multiple pixel resolutions.

4. The system of Claim 3, wherein the aerial photograph database (28) is stored at pixel resolutions that represent resolutions of approximately 10, 7.5, 5, 3.75, and 1 meter spacings.

5. The system (20) of Claim 1, further comprising a digital map system (34) that generates a digital map of an area near the aircraft, the terrain elevation database (26) and the aerial photograph database (28) are compatible with the digital map system (34), and the processing device (30) is configured to overlay images on the digital map by displaying aerial photograph data from the aerial photograph database (28) on top of terrain elevation data from the terrain elevation database (26) based on information received from the input device (22), wherein the input device (22) includes a zoom level selector and wherein the processing device (30) is configured to display images based on a selected zoom level.

6. A method for simulating side angle radar in an aircraft, the method comprising:
receiving input from a user;
accessing aerial photograph and digital terrain elevation data based on the
received input; and
displaying an image that simulates side angle radar (SAR) imagery based
on the accessed aerial photograph and terrain elevation data.

7. The method of Claim 6, wherein receiving input includes receiving a zoom level and wherein accessing aerial photograph and terrain elevation data includes accessing data having a pixel resolution corresponding to the received zoom level.

8. The method of Claim 6, wherein receiving input includes receiving a desired mode selected from at least a spot mode and a strip mode, and wherein accessing aerial photograph and terrain elevation data is based on the received desired mode.

9. The method of Claim 6, wherein the accessed aerial photograph and digital terrain data have not been previously combined, and wherein the method further comprises processing the accessed aerial photograph and digital terrain data by overlaying the accessed aerial photograph data on the accessed digital terrain data.

10. The method of Claim 6, wherein receiving input includes receiving input from an input device that is structured in similar fashion to an input device used for an actual airborne SAR.
